# EUROPEAN PATENT APPLICATION

(11) **EP 3 650 516 A1**
(43) Date of publication of application: **13.05.2020**
(21) Application number: 19209563.6
(22) Date of filing: 12.06.2017
(51) Int. Cl.: C09K 17/04, A01N 59/00, C09K 17/00, A01C 21/00, A01G 7/04, A01N 43/90, C05F 11/10, C05F 11/00

(54) **METHOD OF USING MELANIN TO FERTILIZE SOIL**

(30) Priority: 13.06.2016 US 201662349323 P
(62) Divisional of application: 17812847.6
(71) Applicant: Solis Herrera, Arturo, CEP-20000 Aguascalientes (MX)
(72) Inventor: Solis Herrera, Arturo, CEP-20000 Aguascalientes (MX)
(74) Representative: Grünecker Patent- und Rechtsanwälte PartG mbB

(57) **Abstract**

Methods of fertilizing soil, and of increasing a crop yield, plant growth, and rate of seed germination using melanin, or a melanin precursor, derivative, or analog are provided. The methods described herein require water, melanin, or a melanin precursor, derivative, or analog, and a source of electromagnetic energy, such as visible or invisible light energy, to catalyze the electrolysis of water. The electrolysis of water causes the release of diatomic hydrogen into the soil, resulting in fertilization of the soil. Also provided are fertilized soil compositions.

## Description

### CROSS REFERENCE TO RELATED APPLICATION

This application claims priority to U.S. Provisional Application No. 62/349,323, filed on June 13, 2016, the disclosure of which is incorporated herein by reference in its entirety.

### BACKGROUND OF THE INVENTION

The natural fertility of soil is decreasing, such that crops and other plants require increasingly larger amounts of fertilizers, pesticides, herbicides, and other chemical compounds in order to grow and produce sufficient crop yields. However, the use of large amounts of fertilizers, pesticides, herbicides, etc. has adverse effects on the environment, such as increasing air pollution and water pollution.

The biology of agricultural land is not understood fully, because many different factors affect the ability of land to support plant and crop growth. For example, one factor is the rhizome, which is generally defined as the mass of plant roots. The rhizome plays a substantial role in the growth of plants. The rhizome, like any living entity, requires chemical energy to thrive and develop.

The intrinsic ability of melanin to split the water molecule into hydrogen and oxygen upon absorption of electromagnetic energy, such as light energy, has previously been reported in U.S. Patent No. 8,455,145. It is believed that upon the absorption of electromagnetic energy, such as light energy (visible or invisible), melanin catalyzes the dissociation of water into diatomic hydrogen (H₂), diatomic oxygen (O₂), and electrons. Although the splitting of water into hydrogen and oxygen consumes energy, the reaction is reversible, and in the reverse process, the reduction of oxygen atoms with diatomic hydrogen reforms water molecules and liberates energy. In fact, in both stages, dissociation and re-forming, energy is released. In dissociation, the energy that is released is carried by the hydrogen diatomic molecules, and during the re-forming, for every two molecules of water, four high-energy electrons are generated.

### BRIEF SUMMARY OF THE INVENTION

There exists a need for improved methods of fertilizing soil and improving crop yields that do not require chemical compounds, such as fertilizers, herbicides, and pesticides.

It is now discovered that melanin can be used to fertilize soil, and increase crop yields, plant growth, and the rate of seed germination. The inventor has found that using a melanin impregnated material that allows for passage of water, but keeps the melanin from coming into direct contact with soil, exerts beneficial effects derived from the intrinsic ability of melanin to transform electromagnetic energy, such as visible and invisible light energy, into chemical energy by catalyzing the dissociation of the water molecule. Without wishing to be bound by theories, it is believed that the formation of molecular hydrogen (H₂) from the dissociation of the water molecule provides the beneficial effects to soil.

In one general aspect, the invention relates to a method of fertilizing soil, the method comprising:
(a) applying to the soil at least one device comprising a substrate and at least one melanin material selected from the group consisting of natural melanin, synthetic melanin, melanin precursors, melanin derivatives, and melanin analogs;
(b) adding water to the soil, wherein the water is added before, after, or at the same time as step (a); and
(c) exposing the at least one device to a source of electromagnetic energy to initiate a reaction of water electrolysis by the at least one melanin material,
such that H₂ gas is released into the soil.

In another general aspect, the invention relates to a method of increasing a crop yield, plant growth, or a rate of seed germination, the method comprising:
(a) applying to soil in which a plant, seed, or crop will grow at least one device comprising a substrate and at least one melanin material selected from the group consisting of natural melanin, synthetic melanin, melanin precursors, melanin derivatives, and melanin analogs;
(b) adding water to the soil, wherein the water is added before, after, or at the same time as step (a); and
(c) exposing the at least one device to a source of electromagnetic energy to initiate a reaction of water electrolysis by the at least one melanin material,
such that H₂ gas is released into the soil.

In yet another general aspect, the invention relates to a fertilized soil composition comprising soil, water, and at least one device comprising a substrate and at least one melanin material selected from the group consisting of natural melanin, synthetic melanin, melanin precursors, melanin derivatives, and melanin analogs. According to embodiments of the invention, the fertilized soil composition can be used in a method of increasing a crop yield, plant growth, or a rate of the seed germination.

In one preferred embodiment of the invention, the melanin material is natural melanin or synthetic melanin.

In another preferred embodiment, the substrate is silica.

In yet another preferred embodiment, the source of electromagnetic energy is visible or invisible light energy.

The details of one or more embodiments of the invention are set forth in the description below. Other features and advantages will be apparent from the following detailed description and the appended claims.

### BRIEF DESCRIPTION OF THE SEVERAL VIEWS OF THE DRAWINGS

The foregoing summary, as well as the following detailed description of the invention, will be better understood when read in conjunction with the appended drawings. For the purpose of illustrating the invention, there are shown in the drawings embodiments which are presently preferred. It should be understood, however, that the invention is not limited to the precise arrangements and instrumentalities shown in the drawings and described in the following detailed description of the invention.

In the drawings:

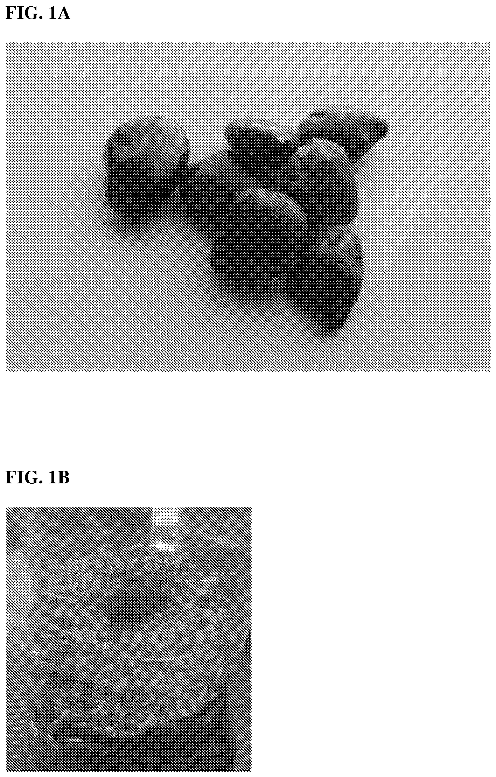

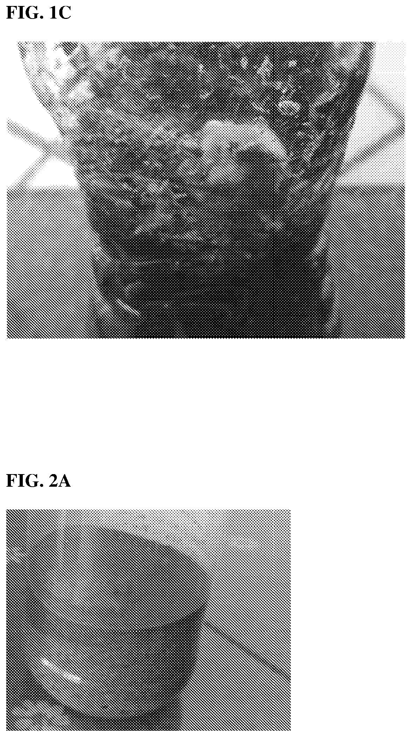

FIGS. 1A-1C are photographic images of tamarind seeds before and after growth in soil in both the absence and presence of a melanin/silica device according to an embodiment of the invention; FIG. 1A is an image of tamarind seeds before cultivation; FIG. 1B is an image of tamarind seeds grown in soil in the absence of a melanin/silica device; FIG. 1C is an image of tamarind seeds grown in soil in the presence of melanin/silica devices; and

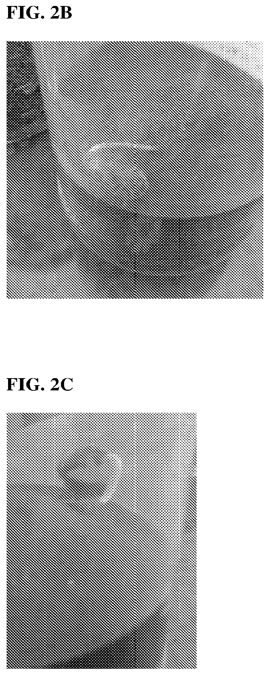

FIGS. 2A-2C are photographic images of tamarind seeds before and after growth in soil in presence of a melanin/silica device in a closed polyethylene terephthalate (PET) container according to an embodiment of the invention; FIG. 2A is an image of the tamarind seed after growth in soil for one day; FIG. 2B is an image of the tamarind seed after growth in soil for twelve days; and FIG. 2C is an image of the tamarind seed after growth in soil for fourteen days.

### DETAILED DESCRIPTION OF THE INVENTION

All patents and publications referred to herein are incorporated by reference. Unless otherwise defined, all technical and scientific terms used herein have the same meaning as commonly understood to one of ordinary skill in the art to which this invention pertains. Otherwise, certain terms used herein have the meanings as set forth in the specification.

It must be noted that as used herein and in the appended claims, the singular forms "a," "an," and "the" include plural references unless the context clearly dictates otherwise.

As used herein, the term "melanin material" refers to melanin (natural or synthetic), melanin precursors, melanin derivatives, and melanin analogs. Derivatives and analogs of melanin include compounds that are derived from, and compounds that are structurally similar to melanin, respectively. Non-limiting examples of derivatives and analogs of melanin include eumelanin, pheomelanin, neuromelanin, sepiomelanins, and alomelanin; aromatic compounds such as dopamine, indole, polyhydroxyindole, humic acid, polyindolequinones, pyrrole black, indole black, benzene black, thiophene black, aniline black, ommochrome black; polyquinones in hydrated form, dopa black, adrenalin black, catechol black, and 4-amine catechol black. Precursors of melanin include compounds that can be converted to melanin by chemical, enzymatic, or metabolic reaction, including, but not limited to, phenols, aminophenols, diphenols, indole polyphenols, quinones, semiquinones, hydroquinones, L-tyrosine, L-dopamine, morpholine, ortho-benzoquinone, dimorpholine, porphyrin black, and pterin black; linear carbon containing compounds such as acetylene black; and carbon building blocks such as fullerenes and graphite.

According to preferred embodiments of the invention, the melanin material is melanin, such as natural melanin or synthetic melanin. "Natural melanin" refers to melanin that is isolated from a natural source, such as a plant or animal. "Synthetic melanin" refers to melanin that is chemically synthesized by any method known in the art. For example, melanin can be synthesized from amino acid precursors of melanin, such as L-tyrosine.

The term "soil" refers to a mixture of minerals, organic matter, gases, liquids, and/or microorganisms that can support the growth of plants, crops, and/or seeds. Soil can be a naturally occurring mixture, or an artificial mixture. In one embodiment, soil can be river sand.

The term "crop" as used herein specifically refers to any cultivated plant that is harvested for food, clothing, livestock fodder, biofuel, medicine, or other uses. Examples of crops include, but are not limited to, grains, fruits and fruit trees, and vegetables, such as tamarind, corn, tobacco, cotton, wheat, barley, soy, apples, mangos, bananas, nuts (e.g., peanuts and pistachios), etc.

In one general aspect, the invention relates to a method of fertilizing soil. According to embodiments of the invention, the method comprises applying to the soil at least one device comprising a substrate and at least one melanin material, adding water to the soil, and exposing the at least one device to a source of electromagnetic energy to initiate a reaction of water electrolysis by the at least one melanin material, such that H₂ gas is released into the soil. Without wishing to be bound by any theories, it is believed that the release of H₂ gas into the soil provides a fertilizing effect to the soil by, e.g., supplying energy to microorganisms present in the soil. The reformation of the water molecule also plays a role in the method of fertilization, although it is believed to be a more limited role than that of the formation and release of H₂ gas. In particular, it is believed that the primary role of the reformation of the water molecule is to reduce the need to add more water to the plant, soil, or crop.

According to embodiments of the invention, the at least one melanin material is selected from the group consisting of natural melanin, synthetic melanin, melanin precursors, melanin derivatives, and melanin analogs. In a preferred embodiment, the at least one melanin material is natural melanin or synthetic melanin. Melanin materials can be obtained by any method known in the art in view of the present disclosure, including chemically synthesizing melanin materials and isolating melanin materials from natural sources, such as plants and animals.

A device used in the invention is comprised of a substrate and at least one melanin material, such that the melanin material is held on or within the substrate. The melanin material can be dispersed throughout the substrate, or impregnated in the substrate. The melanin material can also be adsorbed onto the surface of the substrate. The substrate is transparent to at least one form of electromagnetic energy, which allows for increased transmission of electromagnetic energy to the melanin material, resulting in increased electrolysis of water, and thus increased H₂ production. In certain embodiments, the device is porous to allow for the passage of water into the device, so that the melanin material held within the device can come into contact with water.

A device can comprise one type of melanin material, or more than one type of melanin material. For example, a device for use in the invention can comprise melanin and eumelanin. According to another embodiment of the invention, more than one device, with each device comprising a different type of melanin material can be used. For example, a first device comprising melanin and a second device comprising eumelanin can both be used in the methods and compositions described herein.

The substrate of the device can be any inert material of synthetic or natural origin, and is preferably of an inert material that is porous and allows for the passage of water. Examples of materials that can be used for the substrate include, but are not limited to, silica, plastic, and glass. In a preferred embodiment, the substrate is silica, such that the device is a mixture of silica and at least one melanin material. The device can be, for example, a melanin/silica plate or cube, either of which can be made by combining a cementing mixture of silica with an aqueous melanin solution.

In a preferred embodiment, a device for use in the invention is melanin (synthetic or natural) mixed with silica.

According to embodiments of the invention, the device can be of any size or shape, including, but not limited to, a rod (cylindrical), plate, sphere, or cube-shape. At least one device is used, but the number of devices, or the size or shape of the devices, is not limited in any way. The rate of H₂ gas production will depend upon a variety of factors and can be controlled by varying, for example, the size, shape, surface area, amount of melanin material in the device, and number of devices used. Thus, the size, shape, and number of devices are selected based on the desired rate and amount of water electrolysis catalyzed by the melanin material. For example, using a larger number of devices will result in an increased amount of H₂ production, thus providing a greater fertilizing effect. As another illustrative example, a larger amount of melanin material in the one or more devices will also result in an increased amount of H₂ production. It is well within the purview of one of ordinary skill in the art to determine the size and shape of the device, as well as the number used, the specific melanin material, and the amount of melanin material in order to achieve the desired amount of H₂ production.

In a preferred embodiment, a device is in the shape of a cube. In a more preferred embodiment, multiple devices each in the shape of a cube are used in the invention. As an illustrative example, cube-shaped devices with silica as the substrate can be made by combining silica powder, purified water, and melanin (e.g., synthetic melanin or natural melanin) in a cube-shaped container made of an inert material. The components are mixed together and the mixture is allowed to harden, such that the hardened mixture takes on the shape of the container. Preferably, melanin is added at a concentration of 5g/L of purified water. Devices can be made in any shape according to the same process by mixing silica powder, water, and melanin in a container having the desired shape, and subsequently allowing the mixture to harden in the container. The silica powder can be substituted for any other inert material in order to produce devices having a material other than silica as the substrate.

In a particular embodiment, a device in is the shape of a cube having the dimensions 1 cm x 1 cm x 1cm.

According to embodiments of the invention, at least one device comprising a substrate and at least one melanin material is applied to the soil, and water is also added to the soil. The order in which the at least one device and water are added/applied to the soil is not important, and can be done in any order. For example, water can be added to the soil before, after, or at the same time that the at least one melanin device is applied to the soil.

In one embodiment of the invention, water is added to the soil prior to applying the at least one device to the soil.

In another embodiment of the invention, water is added to the soil at the same time that the at least one device is applied to the soil.

In yet another embodiment of the invention, water is added to the soil after the at least one device is applied to the soil.

The amount of water added to soil can vary depending on a variety of factors, such as climate and humidity. The water can be present in the form of water moisture, such as water moisture retained in the soil. Thus, in certain embodiments, an amount of water added to the soil is an amount needed to sufficiently moisten the soil. Additionally, melanin can have tightly bound water molecules, and it is believed that the associated water content of melanin is at least 40%. Thus, the source of water for the water electrolysis reaction catalyzed by melanin can also be the bound water molecules.

According to embodiments of the invention, the devices can be arranged in any way within, or on top of the soil. For example, the devices can be mixed into or buried within the soil. The devices can also be placed on top of the soil. Preferably, the devices are buried within the soil. For example, the devices can be buried 3 cm or more below the surface of the soil, such as, for example, 15 cm to 20 cm below the surface of the soil.

The melanin material can also be applied directly to soil in solid or liquid form. However, the direct application of the melanin material to the soil would not permit for the subsequent recovery and reuse of the melanin. Accordingly, the use of a device comprising the melanin material and a substrate in accordance with the invention is advantageous at least because a barrier is provided which keeps the melanin material separated from the soil. The melanin material can thus be reused almost indefinitely, since it is retained by the substrate of the device, reducing the costs of soil fertilization, and improved plant and crop growth.

According to embodiments of the invention, the device is exposed to a source of electromagnetic energy to initiate a reaction of water electrolysis of the at least one melanin material. Forms of electromagnetic energy suitable for use in a method of the invention include visible and invisible light, sunlight, gamma rays, X-rays, ultraviolet radiation, infrared radiation, microwaves, and radio waves. Preferably, the source of electromagnetic energy used can penetrate soil to reach any devices that are mixed in with the soil, or buried within the soil.

According to a preferred embodiment, the source of electromagnetic energy is visible light or invisible (ultraviolet and infrared radiation) light having a wavelength between 200 nm and 900 nm.

In another preferred embodiment of the invention, the source of electromagnetic energy is sunlight. "Sunlight" as used herein refers to a portion of the electromagnetic radiation given off by the sun, which includes infrared, visible, and ultraviolet light. Infrared light is electromagnetic radiation having a wavelength in a range of about 700 nm to 1 mm. Visible light is electromagnetic radiation having a wavelength of about 390 nm to 700 nm. Ultraviolet light is electromagnetic radiation having a wavelength in a range of about 10 nm to 380 nm. Sunlight comprises wavelengths that fall within both the invisible and visible light spectrum.

A method of fertilizing soil according to embodiments of the invention will be initiated upon absorption of electromagnetic energy by the melanin material of the device, which catalyzes the electrolysis of water into H₂ and O₂. In certain embodiments of the invention, a method of fertilizing soil can further comprise a step of watering the soil. The frequency with which the soil is watered will depend on a variety of ambient conditions, such as temperature, humidity, wind, type of soil, type of crop, etc. In this way, water is continually supplied, and H₂ gas can be continually produced and released into the soil. However, the method does not require a further step of watering the soil, provided that the soil remains moist, thus providing a sufficient amount of water for initiation of the water electrolysis reaction upon exposure to a source of electromagnetic energy.

According to embodiments of the invention, a crop, plant, or seed can also be in the soil. The crop, plant, or seed can be put into the soil at the same time as the one or more devices, or any time after the devices have been placed in the soil. In certain embodiments, the crop, plant or seed, is put in the soil after the devices have incubated in the soil for a period of time, e.g., one or more weeks up to three to six months, such as one week, two weeks, one month, two months, three months, four months, five months, or six months.

According to embodiments of the invention, a method of fertilizing soil can be performed in a closed container. There are at least two purposes for using a closed container. The first is to prevent the loss of significant water moisture and/or water present in the container, such as water moisture in the soil, by evaporation. The second is to maintain the soil in contact with H₂ gas. The container can take on any shape, and can be made of any suitable material including, but not limited to, plastics, glass, and any other materials that allow for the transmission of the desired wavelengths of electromagnetic energy into the container, such that the reaction of water electrolysis can be initiated, thereby forming H₂ gas. The material of the closed container is preferably transparent to allow for the transmission of visible light. The material of the closed container is also preferably substantially impermeable to H₂ gas. The container can have a rigid shape, or it can have a free form shape, such as plastic wrap or a plastic bag. It is preferable to use a closed container when it is desirable to maximize the amount of water that is retained in the soil, such as in dry climates. However, the methods of the invention described herein can be performed in an open container or a partially closed container.

According to embodiments of the invention, the method can be performed at any temperature, which can include temperatures below 0°C or above 40°C. In preferred embodiments, the method can be performed at a temperature between about 15°C and 35°C. Most preferably, the method is performed at a temperature between about 20°C and 30°C.

In another aspect, the invention relates to a method of increasing a crop yield, plant growth, or a rate of seed germination. The method comprises applying to soil in which a plant, crop, or seed will grow at least one device comprising a substrate and at least one melanin material selected from the group consisting of natural melanin, synthetic melanin, melanin precursors, melanin derivatives, and melanin analogs; adding water to the soil; and exposing the device to a source of electromagnetic energy to initiate a reaction of water electrolysis by the at least one melanin material, such that H₂ gas is released into the soil.

According to embodiments of the invention, at least one seed, plant, or crop can be in the soil. The plant, seed, or crop can be placed in the soil prior to applying the device(s) and/or water to the soil, or the seed, plant, or crop can be placed in the soil after the device(s) and/or water are applied to the soil. In other words, the water, one or more devices, and seed, plant or crop can be added to the soil in any order.

As used herein, the phrases "increased crop yield" and "increasing a crop yield" mean that a greater amount of crop is obtained when the crop is grown in soil to which at least one device comprising a substrate and at least one melanin material in accordance with the invention has been applied, as compared to the amount of crop obtained from growth in the same soil in the absence of such a device.

As used herein, the phrases "increasing plant growth" and "increased plant growth" mean that more plant growth is observed when the plant is grown in soil to which at least one device comprising a substrate and at least one melanin material in accordance with the invention has been applied, as compared to the amount of plant growth observed when the plant is planted in the same soil in the absence of such a device. In one embodiment, increased plant growth refers to faster plant growth under the conditions used for growth. In another embodiment, increased plant growth refers to growth of plants under conditions, or in a climate in which that particular plant would not normally grow. For example, increased plant growth can refer to growth of a plant in dry or semi-arid conditions when that type of plant would normally only grow in more humid or tropical, wet climates. In a particular embodiment, increased plant growth refers to an increased rate of seed germination, meaning that seeds begin to germinate in less time under the growth conditions as compared to the germination time under the same conditions, but in the absence of a device comprising at least one melanin material in accordance with the invention. Melanin tends to modify the environment in which it is, in the favor of life, for example, melanin tends to disarm/detoxify toxic molecules in the environment and tends to favor/promote molecules that are conducive to the emergence of the crop, seed, plants, etc. Further, melanin can, for example, decrease soil temperature, if the soil temperature is too high, or, alternatively, melanin can, for example, increase soil temperature, if the soil temperature is too low. In there is too much moisture in the soil, melanin can act to reduce the moisture content, or alternatively, if there is too little moisture in the soil, melanin can act to increase the moisture content.

Any source of electromagnetic energy can be used in view of the present disclosure. Preferred sources of electromagnetic energy include visible light or invisible light having a wavelength between 200 nm and 900 nm. The source of electromagnetic energy can also be sunlight.

In a preferred embodiment, the melanin material is natural melanin or synthetic melanin. In another preferred embodiment, the substrate of the device is silica. In yet another preferred embodiment, the device comprises a mixture of silica, and natural melanin or synthetic melanin.

In another general aspect, the invention relates to a fertilized soil composition comprising soil, water, and at least one device comprising a substrate and at least one melanin material selected from the group consisting of natural melanin, synthetic melanin, melanin precursors, melanin derivatives, and melanin analogs. Any substrate and melanin material can be used in view of the present disclosure. In a preferred embodiment, the substrate is silica and the melanin material is selected from natural melanin and synthetic melanin.

According to embodiments of the invention, the amount of water in the fertilized soil composition can vary. For example, the water can be present in an amount sufficient to moisten the soil. The fertilized soil composition can also be stored in a closed container to prevent or reduce water evaporation.

According to embodiments of the invention, a fertilized soil composition can be used in any of the methods of the invention described herein.

In one embodiment, a fertilized soil composition can be used in a method of increasing a crop yield. According to embodiments of the invention, the method comprises growing the crop in the fertilized soil composition under conditions suitable for growth of the crop, and exposing the at least one device to a source of electromagnetic energy to initiate a reaction of water electrolysis by the at least one melanin material, such that H₂ gas is released into the soil.

In another embodiment, a fertilized soil composition can be used in a method of increasing plant growth. According to embodiments of the invention, the method comprises growing the plant in the fertilized soil composition under conditions suitable for growth of the plant, and exposing the at least one device to a source of electromagnetic energy to initiate a reaction of water electrolysis by the at least one melanin material, such that H₂ gas is released into the soil.

In yet another embodiment, a fertilized soil composition can be used in a method of increasing a rate of seed germination. According to embodiments of the invention, the method comprises growing the seed in the fertilized soil composition under conditions suitable for growth of the seed, and exposing the at least one device to a source of electromagnetic energy to initiate a reaction of water electrolysis by the at least one melanin material, such that H₂ gas is released into the soil.

The conditions suitable for growth of the plant, crop, or seed will vary depending on the particular type of plant, crop, or seed. It is well within the purview of one of ordinary skill in the art to determine the appropriate conditions for growth based on the particular plant, seed, or crop.

The precise mechanism by which melanin, and its precursors, derivatives, analogs, and variants, are able to use electromagnetic energy and catalyze water electrolysis to produce diatomic hydrogen is not yet fully understood. Without wishing to be bound by any theories, it is believed that melanin absorbs the electromagnetic energy, promoting the conversion of low energy electrons to high energy electrons. The high energy electrons are thought to be transferred by mobile electron carriers within the melanin material. This electron transfer releases energy and establishes a proton gradient sufficient to initiate the splitting of water into diatomic hydrogen (H₂) and diatomic oxygen (O₂) along with the release of four high energy electrons for every two water molecules that are reformed.

The water electrolysis reaction catalyzed by the melanin material upon exposure to a source of electromagnetic energy is believed to release diatomic hydrogen into the soil, thus fertilizing the soil. Many factors will affect the rate and efficiency of soil fertilization, as well as plant growth, crop growth, seed germination, etc. These factors include, but are not limited to, the amount and particular wavelength of electromagnetic energy; the number of devices; the amount and type of melanin material in the device; and the amount of electromagnetic energy absorbed by the melanin material. However, water, a source of electromagnetic energy, and at least one melanin material are sufficient to initiate a reaction of water electrolysis.

The methods of fertilizing soil, and of increasing crop yield, plant growth, and rate of seed germination according to embodiments of the invention require only the presence of a device comprising a substrate and at least one melanin material, water, and electromagnetic energy, such as visible or invisible light energy. Thus, no complex setup or maintenance is required. Because melanin is one of the most stable molecules known to man, having a half-life estimated to be on the order of millions of years, the device comprising the melanin material can be reused for decades before it needs to be replaced. Therefore, methods of fertilizing soil, and increasing plant growth, crop yields, seed germination, etc. according to embodiments of the invention can reduce pollution of air and water caused by other chemical fertilizers, which is an advantageous effect.

### EXAMPLES

### Example 1: Tamarind Seed Growth

Tamarind seeds (FIG. 1A) were grown in river sand (soil) in a closed polyethylene terephthalate (PET) container. Two containers were set up, and six cubes of synthetic melanin mixed with silica having the dimensions 1 cm x 1 cm x 1 cm (devices) were buried within the soil. Purified water (about 80 mL) was added to moisten the soil. Water was not added to the container at any other time during the course of the experiment. The soil was then incubated with the melanin/silica cubes for about one month at room temperature (about 18°C to 35°C) under exposure to natural light.

Thereafter, tamarind seeds were placed on top of the soil, and incubated under the same conditions. Additionally, the experiment was performed in Aguascalientes, Mexico, which has a semi-arid climate. Tamarind seeds are not native to Aguascalientes, Mexico, and typically grow naturally in hot, humid (tropical) climates.

After about three weeks, no germination was observed in the containers in which melanin/silica devices were not included (FIG. 1B). In contrast, germination of the tamarind seeds in the container with the melanin/silica devices was observed (FIG. 1C).

The results of the above experiment demonstrate that applying a mixture of melanin and silica to soil, and exposing the melanin/silica mixture to a source of electromagnetic energy results in the production and release of diatomic hydrogen into the soil. The release of diatomic hydrogen into the soil fertilizes the soil, such that it can support the plant growth and increase the rate of seed germination in non-native climates.

### Example 2: Tamarind Seed Growth

Tamarind seeds were grown in soil (river sand) in a closed polyethylene terephthalate (PET) container in Aguascalientes, Mexico, which has a semi-arid climate. One container was set up, and six cubes of synthetic melanin mixed with silica having the dimensions 1 cm x 1 cm x 1 cm (devices) were buried within the soil. Purified water (about 80 mL) was added to moisten the soil. Water was not added to the container again at any other point during the course of the experiment. The soil was then incubated with the melanin/silica cubes for about one month at room temperature (about 18°C to 35°C) under exposure to natural light.

Thereafter, a tamarind seed was placed on top of the soil, and incubated under the same conditions. After one day of incubation, no growth was observed (FIG. 2A). However, growth was observed after about a week and a half. See FIG. 2B and FIG. 2C, which show growth after twelve days and fourteen days, respectively.

It will be appreciated by those skilled in the art that changes could be made to the embodiments described above without departing from the broad inventive concept thereof. It is understood, therefore, that this invention is not limited to the particular embodiments disclosed, but it is intended to cover modifications within the spirit and scope of the invention as defined by the appended claims.

The invention is also defined by the following embodiments:
1. A method of fertilizing soil, the method comprising:
   (a) applying to the soil at least one device comprising a substrate and at least one melanin material selected from the group consisting of natural melanin, synthetic melanin, melanin precursors, melanin derivatives, and melanin analogs;
   (b) adding water to the soil, wherein the water is added before, after, or at the same time as step (a); and
   (c) exposing the at least one device to a source of electromagnetic energy to initiate a reaction of water electrolysis by the at least one melanin material,
   such that H₂ gas is released into the soil.
2. The method according to embodiment 1, wherein the soil comprises at least one seed, plant, or crop.
3. The method according to embodiment 1, wherein the source of electromagnetic energy is selected from the group consisting of invisible light energy, visible light energy, X-rays, ultraviolet radiation, radio waves, and gamma rays.
4. The method according to embodiment 1, wherein the source of electromagnetic energy is visible or invisible light energy having a wavelength between 200 nm and 900 nm.
5. The method according to embodiment 1, wherein the source of electromagnetic energy is sunlight.
6. The method according to embodiment 1, wherein the substrate is silica.
7. The method according to embodiment 1, wherein the at least one melanin material is natural melanin or synthetic melanin.
8. The method according to embodiment 1, wherein the method is performed in a closed container.
9. A method of increasing a crop yield, plant growth, or a rate of seed germination, the method comprising:
   (a) applying to soil in which a crop, plant, or seed will grow at least one device comprising a substrate and at least one melanin material selected from the group consisting of natural melanin, synthetic melanin, melanin precursors, melanin derivatives, and melanin analogs;
   (b) adding water to the soil, wherein the water is added before, after, or at the same time as step (a); and
   (c) exposing the at least one device to a source of electromagnetic energy to initiate a reaction of water electrolysis by the at least one melanin material,
   such that H₂ gas is released into the soil.
10. The method according to embodiment 9, wherein the soil comprises at least one seed, plant, or crop.
11. The method according to embodiment 9, wherein the source of electromagnetic energy is selected from the group consisting of invisible light energy, visible light energy, X-rays, ultraviolet radiation, radio waves, and gamma rays.
12. The method according to embodiment 9, wherein the source of electromagnetic energy is visible or invisible light energy having a wavelength between 200 nm and 900 nm.
13. The method according to embodiment 9, wherein the substrate is silica.
14. The method according to embodiment 9, wherein the at least one melanin material is natural melanin or synthetic melanin.
15. The method according to embodiment 9, wherein the method is performed in a closed container.
16. A fertilized soil composition comprising soil, water, and at least one device comprising a substrate and at least one melanin material selected from the group consisting of natural melanin, synthetic melanin, melanin precursors, melanin derivatives, and melanin analogs.
17. The fertilized soil composition according to embodiment 16, wherein the substrate is silica.
18. A method of increasing a crop yield, the method comprising growing the crop in the fertilized soil composition according to embodiment 16 under conditions suitable for growth of the crop, and exposing the at least one device to a source of electromagnetic energy to initiate a reaction of water electrolysis by the at least one melanin material, such that H₂ gas is released into the soil.
19. A method of increasing plant growth, the method comprising growing the plant in the fertilized soil composition according to embodiment 16 under conditions suitable for growth of the plant, and exposing the at least one device to a source of electromagnetic energy to initiate a reaction of water electrolysis by the at least one melanin material, such that H₂ gas is released into the soil.
20. A method of increasing a rate of seed germination, the method comprising growing embodiment the seed in the fertilized soil composition according to embodiment 16 under conditions suitable for growth of the seed, and exposing the at least one device to a source of electromagnetic energy to initiate a reaction of water electrolysis by the at least one melanin material, such that H₂ gas is released into the soil.

## Claims

1. A method of fertilizing soil, the method comprising:
(a) applying to the soil at least one device comprising a substrate and at least one melanin material selected from the group consisting of natural melanin, synthetic melanin, melanin precursors, melanin derivatives, and melanin analogs;
(b) adding water to the soil, wherein the water is added before, after, or at the same time as step (a); and
(c) exposing the at least one device to a source of electromagnetic energy to initiate a reaction of water electrolysis by the at least one melanin material,
such that H₂ gas is released into the soil.

2. The method according to claim 1, wherein the soil comprises at least one seed, plant, or crop.

3. The method according to claim 1, wherein the source of electromagnetic energy is
• selected from the group consisting of invisible light energy, visible light energy, X-rays, ultraviolet radiation, radio waves, and gamma rays; or
• visible or invisible light energy having a wavelength between 200 nm and 900 nm; or
• sunlight.

4. The method according to claim 1, wherein the substrate is silica.

5. The method according to claim 1, wherein the method is performed in a closed container.

6. A method of increasing a crop yield, plant growth, or a rate of seed germination, the method comprising:
(a) applying to soil in which a crop, plant, or seed will grow at least one device comprising a substrate and at least one melanin material selected from the group consisting of natural melanin, synthetic melanin, melanin precursors, melanin derivatives, and melanin analogs;
(b) adding water to the soil, wherein the water is added before, after, or at the same time as step (a); and
(c) exposing the at least one device to a source of electromagnetic energy to initiate a reaction of water electrolysis by the at least one melanin material,
such that H₂ gas is released into the soil.

7. The method according to claim 6, wherein the soil comprises at least one seed, plant, or crop.

8. The method according to claim 6, wherein the source of electromagnetic energy is
• selected from the group consisting of invisible light energy, visible light energy, X-rays, ultraviolet radiation, radio waves, and gamma rays; or
• visible or invisible light energy having a wavelength between 200 nm and 900 nm.

9. The method according to claim 6, wherein the substrate is silica.

10. The method according to claim 6, wherein the method is performed in a closed container.

11. A fertilized soil composition comprising soil, water, and at least one device comprising a substrate and at least one melanin material selected from the group consisting of natural melanin, synthetic melanin, melanin precursors, melanin derivatives, and melanin analogs.

12. The fertilized soil composition according to claim 11, wherein the substrate is silica.

13. A method of increasing a crop yield, the method comprising growing the crop in the fertilized soil composition according to claim 11 under conditions suitable for growth of the crop, and exposing the at least one device to a source of electromagnetic energy to initiate a reaction of water electrolysis by the at least one melanin material, such that H₂ gas is released into the soil.

14. A method of increasing plant growth, the method comprising growing the plant in the fertilized soil composition according to claim 11 under conditions suitable for growth of the plant, and exposing the at least one device to a source of electromagnetic energy to initiate a reaction of water electrolysis by the at least one melanin material, such that H₂ gas is released into the soil.

15. A method of increasing a rate of seed germination, the method comprising growing the seed in the fertilized soil composition according to claim 11 under conditions suitable for growth of the seed, and exposing the at least one device to a source of electromagnetic energy to initiate a reaction of water electrolysis by the at least one melanin material, such that H₂ gas is released into the soil.
